(19) Europäisches Patentamt
European Patent Office
Office européen des brevets

(11) Veröffentlichungsnummer: **0 001 992**
**B1**

(12) **EUROPÄISCHE PATENTSCHRIFT**

(45) Veröffentlichungstag der Patentschrift: **01.04.81**

(51) Int. Cl.³: **C 04 B 17/01, C 04 B 21/02**

(21) Anmeldenummer: **78101236.4**

(22) Anmeldetag: **27.10.78**

(54) **Verschäumbare Magnesiazementmischung, ihre Verwendung und Verfahren zur Herstellung poröser Formkörper.**

(30) Priorität: **22.11.77 DE 2752004**

(43) Veröffentlichungstag der Anmeldung:
**30.05.79 Patentblatt 79/11**

(45) Bekanntmachung des Hinweises auf die Patenterteilung:
**01.04.81 Patentblatt 81/13**

(84) Benannte Vertragsstaaten:
**BE CH DE FR GB LU NL SE**

(56) Entgegenhaltungen:
**DE - A - 2 264 835**
**FR - A - 704 410**
**FR - A - 960 778**
**GB - A - 1 028 243**
**NL - A - 74 04927**

(73) Patentinhaber: **BAYER AG**
**Zentralbereich Patente, Marken und Lizenzen**
**D-5090 Leverkusen 1, Bayerwerk (DE)**

(72) Erfinder: **Kyri, Hans, Dr.**
**Gerstenkamp 5**
**D-5000 Köln 80 (DE)**

**EP 0 001 992 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

# Verschäumbare Magnesiazementmischung, ihre Verwendung und Verfahren zur Herstellung poröser Formkörper

Die vorliegende Erfindung betrifft eine verschäumbare Magnesiazementmischung, daraus hergestellte poröse Formkörper sowie ein Verfahren zu deren Herstellung.

Magnesiazemente sind schon lange bekannt, sowohl auf der Basis von Magnesiumsulfat als auch Magnesiumchlorid und Magnesiumoxid. Nach dem Abbinden der Rohstoffmischung entsprechen die entstandenen Festkörper der Formel

$$MgCl_2 \cdot 5Mg(OH)_2 \cdot 8H_2O$$

oder dem analogen Magnesiumoxisulfat. Ein Überschuß an löslichem Magnesiumsalz gegenüber dieser Formel wird vermieden, da dies zu Ausblühungen an den entstehenden Festkörpern führt. Ein Überschuß von Wasser wird nach dem Abbinden durch Trocknung oder Absaugen aus dem Festkörper entfernt. Es ist bekannt, solchen Mischungen gebrannten Magnesit, der durch Brennen von natürlichem Magnesiumcarbonat bei 800 bis 900°C hergestellt wird, zuzugeben.

Wasserärmere und damit auch zähflüssigere Systeme erfordern bei der Verschäumung eine sehr genaue Abstimmung zwischen der Geschwindigkeit der Porenstrukturbildung und der Abbindegeschwindigkeit des Systems, Nach Beendigung der Gasentwicklung muß das System so weit verfestigt sein, daß es die Schaumstruktur selbst tragen kann. Nach derzeitiger Kenntnis wird eine verschäumte Masse weder geschüttelt noch gerührt, da sonst mit einem zumindest teilweisen Zerfall der Schaumstruktur gerechnet werden muß (O. Ettel, Bauplanung und Bautechnik, 6. Jahrgang, Heft 7, Seiten 171 bis 174, 1952).

Im Bereich des Bauwesens z.B. besteht ein Bedarf nach einer anorganischen verschäumbaren Masse, die unter völliger Erhaltung der Schaumstruktur durch Verstreichen, Einpressen oder Verspritzen in Formen oder Hohlräume verarbeitet werden kann, und die durch Abbinden bei Raumtemperatur zu einem harten porösen Körper erstarrt. Besonders erwünscht ist ein anorganischer und daher unbrennbarer, poröser Werkstoff, der aufgrund seiner Verarbeitungseigenschaften weitgehend mit den gängigen Verarbeitungsmethoden für organische Schaumstoffe verarbeitbar ist.

Bisher bewirkte die Steifigkeit eines Schaumes Probleme, da es z.B. beim Ausfüllen von Hohlräumen, wie Kabeldurchbrüchen etc. meist nicht möglich war, den auszufüllenden Raum flüssigkeitsdicht zu verschalen. Die geforderte Masse muß also etwa die Konsistenz einer Putzmasse haben, die nach dem Einstreichen in einen solchen Hohlraum nicht mehr aus ihm herausfließt. Ähnliche Anforderungen werden an poröse, feuerbeständige Putze gestellt, die als Feuerschutzmasse auf Stahlträgern in Bauwerken aufgestrichen werden, um die Erwärmung der Stahlträger im Brandfalle zu verzögern.

Die bisher verschäumten anorganischen Massen sind entweder dünnflüssig und so stabil, daß sie durch Vergießen in Formen eingebracht werden können, wobei an diese Formen sehr hohe Anforderungen hinsichtlich des dichten Abschlusses, um ein Auslaufen der verschäumten Masse zu verhindern, gestellt werden müssen, oder sie sind sehr steif, dann aber auch so instabil, daß sie nicht verformt werden können.

Gegenstand der vorliegenden Erfindung sind mittels Wasserstoffperoxid und gegebenenfalls Katalysatoren verschäumbare Magnesiazement-Mischungen, enthaltend
a) Zelluloseäther und/oder wasserlösliche Eiweißprodukte und
b) Kaoline und/oder Tone.

Vorzugsweise bestehen die mittels Wasserstoffperoxid und gegebenenfalls Katalysatoren verschämbaren Magnesiazementmischungen aus:

12,5 bis 16 Gew.-% Magnesiumchlorid,
35 bis 45 Gew.-%gebranntem Magnesit,
35 bis 40 Gew.-% Wasser,
0 bis 0,1 Gew.-% Netzmittel,
3 bis 25 Gew.-% Tone und/oder Kaolin,
0,005 bis 0,15 Gew.-% Zelluloseäthern und/oder wasserlöslichen Eiweißprodukten und gegebenenfalls Zuschlagstoffen.

Gegenstand der vorliegenden Erfindung ist ferner ein Verfahren zur Herstellung poröser Formkörper auf Basis Magnesiazement, welches dadurch gekennzeichnet, ist, daß Magnesiumchlorid, gebrannter Magnesit, Wasser und gegebenenfalls Netzmittel und Zuschlagstoffe zusammen mit
a) Zelluloseäthern und/oder wasserlöslichen Eiweißprodukten und
b) Kaolinen und/oder Tonen
homogen vermischt werden, und dieses Gemisch durch Einrühren von 0,1 bis 1 Gew.-% Wasserstoffperoxid und gegebenenfalls Katalysatoren verschäumt wird.

Das Verfahren zur Herstellung dieser porösen Formörper auf Basis Magnesiazement ist vorzugsweise dadurch gekennzeichnet, daß durch Vermischen von

12,5 bis 16 Gew.-% Magnesiumchlorid,
35 bis 45 Gew.-% gebranntem Magnesit,
35 bis 40 Gew.-% Wasser,
0 bis 0,2 Gew.-% Netzmittel,
3 bis 25 Gew.-% Tone und/oder Kaolin,
0,005 bis 0,15 Gew.-% Zelluloseäthern und/oder wasserlöslichen Eiweißprodukten und gegebenenfalls Zuschlagstoffen.

ein homogenes Gemisch zubereitet und dieses Gemisch durch Einrühren von 01, bis 1 Gew.-% Wasserstoffperoxid un ggf. Katalysatoren verschäumt wird.
Vorzugsweise besteht die verschäumbare Magnesiazementmischung aus:

12,5 bis 15 Gew.-% Magnesiumchlorid,
35 bis 40 Gew.-% gebranntem Magnesit,
35 bis 40 Gew.-% Wasser,
0,001 bis 0,1 Gew.-% Netzittel,
5 bis 15 Gew.-% Tone und/oder Kaolin,
0,01 bis 0,15 Gew.-% Zusatzstoffe und gegebenenfalls
0. bis 15 Gew.-% Zuschlagstoffen.

Die Verwendung der erfindungsgemäßen Magnesiazementmischungen zur Ausfüllung und/oder Verschließung von Hohlräumen für Brandschutzschichten und/oder Brandschutztüren, für wärmeisolierende Bauelemente und für Brandschutzmauern in Kabelschächten ist gleichfalls Gegenstand der vorliegenden Erfindung.

Als Magnesiumoxid-Rohmaterial kann z.B. gebrannter Magnesit oder auch auf chemischen Wege hergestelltes Oxid eingesetzt werden. Bei der Verwendung von chemisch hergestellten Oxid ist es erfindungsgemäß nicht nötig, tonartige Substanzen und/oder Kaoline einzusetzen, im Gegensatz zu der Verwendung von Kaustisch gebrannten Magnesit, bei der sowohl Zelluloseäther und/oder wasserlösliche Eiweißprodukte und Kaoline und/oder Tone angewendet werden müssen. Vorzugsweise' wird erfindungsgemäß jedoch kaustisch gebranntes Magnesiumoxid eingesetzt.

Überraschenderweise wurde gefunden, daß die vorzugsweise Anwendung eines organischen Verdickungsmittels aus der Gruppe der Zelluloseäther und/oder wasserlöslicher Eiweißprodukte als Zusatzstoffe und zusätzlich eines anorganischen Verdickungsmittels aus der Gruppe der Kaoline und/oder der Tone, zu einer drastischen Erhöhung der Fließgrenze in den verschäumten Magnesiazementmischungen führt. Die mittels eines Rührviskosimeters meßbare Viskosität sowohl der unverschäumten Rohstoffmischung als auch der verschäumten Mischung entspricht dabei unter vergleichbaren Bedingungen nur den Viskositäten, die bei einzelner Anwendung der organischen bzw. anorganischen Verdickungsmittel erreicht werden.

Nach der vorliegenden Erfindung werden Magnesiazementmischungen, die durch gemeinsamen Zusatz von organischen und anorganischen Verdickungsmitteln so modifiziert sind, daß sie beim Verschäumen mit Wasserstoffperoxid einene steifen Schaum ergeben, der unter der Einwirkung der natürlichen Schwerkraft nicht mehr frei fließt, verschäumt. Vorzugsweise wird eine Magnesiazementmischung, deren Zusammensetzung durch die Formel

$$MgCl_2 \cdot 5Mg(OH)_2 \cdot 8H_2O + X\,Mg(OH)_2$$

charakterisiert werden kann, wobei X Werte zwischen 0 und 4 annehmen kann, zubereitet und verschäumt.

Ein erfindungsgemäß verschäumter Magnesiazement bindet zu einem harten porösen Körper ab, der nicht mehr getrocknet werden muß. Mit einer solchen Masse können daher auch Hohlräume ausgefüllt und sofort verschlossen werden.

Wäßrige Lösungen der Suspensionen können durch den Zusatz wasserlöslicher, hochmolekularer Verbindungen viskos gemacht werden, verwendet werden z.B. natürliche oder synthetische organische Kolloide. Im Fall der vorgeschlagenen Magnesiazementmischungen ist die Zusatzmenge an solchen Kolloiden durch die Wassermenge, die dieses System aufnehmen kann, begrenzt. Für Systeme, die ohne Wasserüberschuß abbinden, ist der Wassergehalt durch die o.g. Formel definiert. Da aber von einer Lösung der Magnesiumsalze ausgegangen werden muß, kann die für die Auflösung der Kolloide disponible Wassermenge nicht beliebig erhöht werden.

Zelluloseäther oder Eiweißprodukte sind wirksame Zusätze, um die Viskosität der verschäumten Massen zu erhöhen. Trotzdem fließen solchermaßen versteifte Schäume unter der Einwirkung der natürlichen Schwerkraft oder beim Rütteln auseinander. So fließen sie beispielsweise beim Einrütteln in eine Gießform aus einem Spalt von 2 mm Breite noch aus. Diese Schäume zeigen zwar eine deutliche Strukturviskosität, aber nur eine niedrige Fließgrenze, d.h. sie verfließen schon unter der Einwirkung geringer Scherkräfte.

Im Vergleich zu anderen verschäumten anorganischen Suspensionen, z.B. porösem Kalk-

Sandstein, zeigen die erfindungsgemäß vorgeschlagenen verschäumten Magnesiazementmischungen überraschenderweise trotz ihrer hohen Viskosität eine so hohe Stabilität, daß sie durch Verstreichen oder Einrütteln in Formen ohne Verlust ihrer Porenstruktur verarbeitet werden können.

Wird zum Versteifen der Magnesiazementmischungen Kaolin und/oder Ton verwendet, so steigt die Viskosität der flüssigen Rohstoffmischung und die der verschäumten Masse deutlich an. Die Fließgrenze beider Systeme, d.h. des unverschäumten und des verschäumten, bleibt jedoch auch bei einer relativ starken Viskositätserhöhung so niedrig, daß dieses Mischungen allein unter dem Einfluß der Schwerkraft frei verfließen.

Überraschend ist, daß sich die Erhöhung der Fließgrenze bei dieser Maßnahme weitgehend nur in der verschäumten Masse auswirkt. Darüber hinaus wurde gefunden, daß die Verschäumung zu steifen, nicht frei fließenden Schäumen bevorzugt an solchen Rohmischungen durchführbar ist, die trotz hoher Viskosität keine merkliche Fließgrenze aufweisen.

Besonders gute Schäume — im Sinne der vorliegenden Erfindung — werden an solchen Rohstoffmischungen erhalten, deren Fließgrenze nach oben durch die folgende Prüfung eingeschränkt ist:

Eine in der homogen vermischten Rohstoffmischung mit dem stumpfen Ende eines Bleistifts gezogene Spur von 10 mm Tiefe muß innerhalb von ca. 10 Sekunden selbstständig bis auf maximal 3 mm Tiefe zusammenlaufen.

Die mit einem handelsüblichen Rührviskosimeter gemessene Viskosität der verschäumbaren Rohstoffmischung soll mindestens 500 Centipoise betragen. Bei dieser Viskosität erfüllt sie auf jeden Fall die obengenannte Verlaufprobe. Die obere Grenze der Viskosität liegt für eine verschäumbare Mischung bei etwa 12 000 Centipoise. Sie kann durchaus überschritten werden, wenn die Probe mit der Bleistiftspur bestanden wird.

Nach einer anderen Prüfmethode ist die untere Grenze der Viskosität dadurch bestimmt, daß die Rohstoffmischung aus einem Fordbecher mit einer Auslauföffnung von 4 mm nicht mehr vollständig ausläuft.

Rohstoffmischungen, die den Spurtest mit dem Bleistift nicht mehr bestehen, ergeben instabile Schäume, deren Porenvolumenanteil nicht mehr ausreichend reproduzierbar ist. In diesem Fall ist die Zersetzung des Wasserstoffperoxids, selbst in der Gegenwart eines Katalysators, unvollständig.

Die erfindungsgemäßen Mengen der Zusatzstoffe an Zelluloseäther und/oder Eiweißprodukten liegen jeweils zwischen 0,005 und 0,15 Gew.-%, bezogen auf die Summe aus Magnesiumoxid (gebrannter Magnesit), Magnesiumchlorid und Wasser. Art und Molekülgröße der Zelluloseäther haben nur einen geringen Einfluß auf den damit erzielten Versteifungseffekt der Magnesiazementmischung. Als besonders vorteilhaft hat sich die Verwendung von Methyl-hydroxyäthyl-zellulose, Gelatine und/oder Leim erwiesen.

Die Dosierung der Tone richtet sich nach der Plastizität dieser Stoffe und nach dem gewünschten Effekt. Bei den plastischen Bindekontakt-Tonen, wie sie beispielsweise zur Herstellung von Emailschlickern verwendet werden, genügen im allgemeinen Anteile von 5 bis 10 Gew.-%, bezogen auf das Gesamtgewicht der Rohstoffmischung. Von dem weniger plastischen Kaolin werden zwischen ca. 5 und 25 Gew.-% benötigt.

Die Dichte der verschäumten flüssigen Mischung wird durch die Menge des zugesetzten Wasserstoffperoxides geregelt. Diese wird zwischen 0, 25 g/cm$^3$ und ca. 1,5 g/cm$^3$ gewählt.

Die Zersetzung des Wasserstoffperoxides setzt etwa 30 Sekunden nach dessen Zusatz zur Rohstoffmischung ein und ist nach etwa 30 Minuten abgeschlossen. Die Zersetzungsgeschwindigkeit des Wasserstoffperoxides kann durch den Zusatz von für diesen Zweck bekannten Katalysatoren zur Rohstoffmischung beschleunigt werden. Vorzugsweise werden bei der vorliegenden Erfindung als Katalysatoren lösliche Salze von Mangin, Eisen und/oder Kupfer sowie deren Oxide eingesetzt. Ein Überschuß an Katalysatoren sollte vermieden werden, da sonst ein Teil des Sauerstoffs aus der zu verschäumenden Masse entweicht, ohne an der Ausbildung der Porenstruktur teilzunehmen. Besonders vorteilhaft ist z.B. ein Zusatz von 0,1 bis 0,2 g gelöstem Mangandichlorid — Tetrahydrat zu 1000 g Rohstoffmischung. Bei dieser speziellen Mischung setzt die Sauerstoffentwicklung nach ca. 20 Sekunden ein und ist nach 5 Minuten bereits beendet.

Bei dem erfindungsgemäßen Verfahren zur Herstellung poröser Formkörper aus Magnesiumzement werden die bereits genannten Rohstoffe innig vermengt. Es ist möglich, die einzelnen Bestandteile unabhängig und nacheinander voneinander der Mischung zuzusetzen, andererseits konnen z.B. die Netzmittel und/oder Zelluloseäther und/oder Katalysatoren und/oder löslichen Eiweißstoffe bereits in dem Wasser gelöst bzw. aufgeschlämmt sein.

Die erfindungsgemäß verschäumten Magnesiazementmischungen erstarren zu porösen Festkörpern mit wertvollen Eigenschaften. So bilden die porösen Magnesiazemente ausgezeichnete Brandschutzschichten. Ferner lassen sich mittels dieser porösen Massen Brandschutztüren herstellen, deren Feuerwiderstandszeiten etwa 1 Stunde pro 1 cm Schichtdicke des erfindungsgemäß hergestellen Magnesiumzementschaumes betragt. Insbesondere die mit Glasfasern von ca. 3 bis 30 cm Länge als Zuschlagstoff vorstärkten porösen Magnesiazemente verbinden einen hohen Feuerwiderstand mit einer hohen mechanischen Festigkeit bei dem geringen Raumgewicht von ca. 0,5 g/cm$^3$. Anstelle oder zusätzlich zu Glasfasern können als Zuschlagstoffe beispielsweise Eisenoxide, anorganische

Farbkörper und Rostschutzmittel, wie Natriumnitrit, Kaliumnitrit oder Alkaliphosphate eingesetzt werden.

Aus den vorgeschlagenen Massen lassen sich in besonders einfacher Weise, z.B. durch Einstreichen in Formen, wärmeisolierende Bauelemente mit niedrigem Raumgewicht und hoher mechanischer Festigkeit herstellen. Infolge der hohen Fließgrenze der verschäumten Massen lassen sich diese auf der Baustelle ohne den Einsatz komplizierter Verschalungen verarbeiten. Insbesondere bemerkenswert hierfür ist die Errichtung von Brandschutzmauern in Kabelschächten ohne Verwendung einer Verschalung.

Es Wurde gefunden, daß sich die verschäumten Magnesiazemente mit hoher Fließgrenze besonders gut zum Einbetten von Füllstoffen eignen, deren spezifisches Gewicht sehr stark von dem des Schaumes abweicht. So lassen sie sich z.B. mit gemahlener Kurzglasfaser als Zuschlagstoff verstärken, wodurch z.B. die Rissebildung bei einer Brandbelastung weitgehend verhindert wird. Überraschenderweise lassen sich ferner in der unverschäumten Mischung gehackte, gebündelte Glasfasern, sogenannte chopped strands, sehr leicht zu Einzelfasern verteilen, ohne daß dadurch die Länge dieser Fasern verändet wird. Ferner lassen sich solche Massen, die mit chopped strands versetzt sind, ohne weiteres verschäumen, ohne daß sich die Glasfasern zu Klumpen zusammenlagern. Die auf diese Art erhaltenen porösen Festkörper besitzen eine sehr hohe Biegezugfestigkeit. Im Gegensatz dazu verändern die gemahlenen Kurzglasfasern die mechanischen Festigkeitswerte der porösen Körper nicht merklich.

Ähnliche Verfestigungen werden auch mit anderen anorganischen oder organischen Fastern, beispielsweise mit Basaltfasern, Kaolinwolle, Glaswolle und/oder geschnittenen organischen Textilfasern als Zuschlagstoffe erreicht.

Üblicherweise scheitert das Einbetten poröser Füllstoffe mit sehr niedrigem Raumgewicht und vorwiegend geschlossener Porenstruktur in eine Matrix von wesentlich höherem Raumgewicht daran, daß der leichte Füllstoff in der flüssigen Matrix durch den hydrostatischen Auftrieb aufsteigt und sich in der Oberfläche anreichert. Überraschenderweise wurde gefunden, daß die erfindungsgemäß verschäumten Massen diesen Nachteil nicht aufweisen. Es gelingt nämlich, leichte, poröse Füllstoffe in der Rohstoffmischung zu dispergieren und diese anschließend zu verschäumen, ohne daß eine Entmischung eintritt. Selbst wenn in solchen Fällen organische Substanzen als poröser Zuschlagstoff benutzt werden, sind die daraus entstehenden Festkörper nicht brennbar und weisen eine sehr gute Schallabsorption auf.

Als weiterer Zuschlagstoff zu den erfindungsgemäßen Mischungen ist unter den organischen porösen Füllstoffen mit geschlossener Porenstruktur beispielsweise das geschäumte Granulat von Polystyrol mit einer Korngröße von 2 bis 3 mm und einem Schüttgewicht von ca. 30 bis 50 g/l gut geeignet. Vorzugsweise eingesetzte anorganische poröse Zuschlagstoffe mit geschlossener Porenstruktur sind: Hohlglasperlen, granuliertes Schaumglas, geschäumter Perlit, Blähton und andere ähnliche Werkstoffe.

Nach einer Verfahrensvariante werden poröse Körper mit besonders vorteilhaften Eigenschaften erhalten, wenn in einer Magnesiazementmischung der angegebenen Zusammensetzung sowohl Glasfasern als auch poröse Zuschlagstoffe mit geschlossener Porenstruktur eingemischt werden, und diese Mischung anschließend mittels Wasserstoffperoxid, gegebenenfalls unter Verwendung von Katalysatoren, verschäumt wird.

Die vorliegende Erfindung soll durch die folgenden Beispiele noch näher erläutert werden in den Beispielen wurde kautisch gebrannter Magnesit verwendet:

Beispiel 1 (Vergleichsbeispiel)

In einer Rührschüssel von 4 l Inhalt, versehen mit einem Planetenrührwerk von 100 Umdrehungen pro Minute, wurden folgende Rohstoffe zu einer homogenen Maische angerührt:

648 g 33%ige Magnesiumchloridlösung
600 g gebrannter Magnesit
30 g gemahlene Kurzglasfaser (milled fiber)
90 g Wasser
1 g Netzmittel (Natrium-Alkylsulfonat)
0,5 g Manganchlorid ($MnCl_2 \cdot 4H_2O$)

Das Netzmittel und das Manganchlorid wurden wahlweise jeweils in einem Teil des zugesetzten Wassers vorher aufgelöst. Die homogene Maische wurde unter Rühren mit einem Gemisch aus:
20 g Wasserstoffperoxid 35%ig und
15 g Wasser

versetzt. Nach dem Einrühren der Wasserstoffperoxidlösung setzte innerhalb weniger Sekunden die Sauerstoffentwicklung ein, die nach etwa 10 Minuten beendet war. Die verschäumte dünnflüssige Zementmischung war nach Beendigung der Gasbildung vergießbar und lief in einer Gießform aus einem Spalt von 2 mm Breite vollständig aus. Die Maische hatte eine Viskosität von 120 Centipoise und eine

Auslaufzeit von 26 Sek. im Fordbecher mit 4 mm Öffnung. Nach dem Erreichen des Endvolumens hatte der Schaum eine Viskosität von 3200 Centipoise.

Beispiel 2 (Vergleichsbeispiel)

Es wurde verfahren wie in Beispiel 1, jedoch zusätzlich wurden in die Rohstoffmischung 160 g eines gemahlenen Kalksteines mit einer Korngröße von weniger als 0,065 mm eingerührt. Nach dem Erreichen des Endvolumens war die verschäumte Masse noch frei gießbar und floß aus einem Spalt in der Gießform von 2 mm Breite völlig frei heraus. Die Maische hatte eine Viskosität von 115 Centipoise und eine Auslaufzeit von 29 Sek. im Fordbecher mit 4 mm Öffnung. Nach dem Verschäumen hatte die Masse eine Viskosität von 3200 Centipoise.

Beispiel 3 (Vergleichsbeispiel)

Es wurde verfahren wie im Beispiel 2, außerdem wurde der Rohstoffmischung jedoch noch 0,5 g einer Methyl-Hydroxyäthyl-Zellulose in gelöster Form zugesetzt. Dieser Zelluloseäther, dessen 2%ige Lösung in Wasser eine Viskosität von 10 000 Centipoise aufweist, wurde vorher in einem Teil des in der Mischung vorgesehenen Wassers zu einer 1%igen Lösung gelöst.

Die Maische hatte eine Viskosität von 390 Centipoise und eine Auslaufzeit von 113 Sek. im Fordbecher mit 4 mm Öffnung. Nach dem Verschäumen hatte die Masse eine Viskosität von 6000 Centipoise.

Die Rohstoffmischung unterscheidet sich in ihrer Viskosität vor dem Verschäumen nicht von derjenigen im Beispiel 2. Nach dem Verschäumen war die Masse zwar deutlich zähflüssiger als jene nach dem Beispiel 2, sie war aber ohne weiteres vergießbar und zeigte keine merkliche Fließgrenze.

Eine weitere Steigerung der zugesetzten Menge an Zelluloseäther hatte praktisch keinen sichtbaren Einfluß auf Viskosität oder Fließgrenze der verschäumten Mischung.

Die nach den Beispielen 1 bis 3 hergestellten Schäume erstarrten zu porösen Festkörpern, ein Zeichen für die Stabilität der Schaumstruktur entsprechend dem dünnflüssigen Charakter dieser Schäume.

Beispiel 4

In einer Rührschüssel von 4 l Inhalt, mit einem Planetenrührwerk mit 100 Umdrehungen pro Minute versehen, wurden folgende Rohstoffe zu einer homogenen Maische angerührt:

648 g 33%ige Magnesiumchloridlösung
600 g gebrannter Magnesit
30 g gemahlene Kurzglasfaser (milled fiber)
1 g Netzmittel (Natrium-Alkylsulfonat)
0,5 g Manganchlorid ($MnCl_2 \cdot 4H_2O$)
0,3 g Methyl-Hydroxyäthyl-Zellulose
90 g Wasser

In diese homogene Maische wurde feingemahlener, geschlämmter Kaolin eingerührt und zwar so lange, wie eine durch diese Maische mit dem stumpfen Ende eines Bleistiftes gezogene etwa 1 cm tiefe Spur noch innerhalb von 10 Sekunden völlig verlief. Hierzu wurden 170 g weißer Kaolin benötigt.

Nachdem dieser Kaolin homogen verteilt war, wurde die Maische durch Einrühren einer Lösung von 20 g 35%igem Wasserstoffperoxid und 15 g Wasser verschäumt. Die Sauerstoffentwicklung setzte einige Sekunden nach Zugabe des Wasserstoffperoxides ein und war nach 10 Minuten beendet. Es war eine verschäumte Masse mit einem Raumgewicht von 0,5 g/cm³ mit feinporiger Struktur entstanden. Dieser Schaum war so zähflüssig, daß er sich selbst unter intensivem Rütteln nicht aus der Schüssel ausgießen ließ. Er konnte jedoch ohne Veränderung seiner Schaumstruktur mit einer Maurerkelle entnommen und in eine Form eingestrichen werden. Eine mit dem Bleistift, nach obiger Art, gezogene Spur bleibt in diesem Schaum praktisch vollständig erhalten.

Die Maische hatte eine Viskosität von 820 Centipoise und lief aus einem Fordbecher mit 4 mm Öffnung nicht mehr vollständig aus. Die verschäumte Masse hat eine Viskosität von 10 000 Centipoise.

Die nach dem Beispiel 4 erhaltene Masse erstarrte zu einem porösen Festkörper der Dichte 0,5 g/cm³ in völliger Übereinstimmung mit der Dichte des Schaumes. Er zeigte nach 8 Tagen Lagerung eine Druckfestigkeit von 33 kp/cm² und eine Biegezugfestigkeit von 13 kp/cm².

Beispiel 5

In einer Rührschüssel, entsprechend dem Beispiel 4, wurden folgende Rohstoffe zu einer homogenen Maische verrührt:

650 g 33%ige Magnesiumchloridlösung
600 g gebrannter Magnesit
250 g Kaolin
0,5 g Methyl-Hydroxyäthyl-Zellulose

0,5 g Manganchlorid
1 g Natrium-Alkylsulfonat
100 g Wasser

Diese Maische wurde durch Einrühren einer Lösung aus 12 g einer 35%igen Wasserstoffperoxidlösung und 20 g Wasser verschäumt. Es entstand eine schaumige Masse, die nach der Beendigung der Sauerstoffentwicklung so zähflüssig war, daß sie auch unter intensivem Rütteln nicht mehr aus dem Rührgefäß ausfloß. Nach dem Abbinden bildete sich daraus ein poröser Festkörper, der nach 8 Tagen Lagerung eine Dichte von 0,7 g/cm$^3$, eine Biegezugfestigkeit von 20 kg/cm$^2$ und eine Druckfestigkeit von 55 kg/cm$^2$ aufwies.

Die Maische hatte eine Viskosität von 11 500 Centipoise. Eine mit dem stumpfen Ende eines Bleistifts gezogene Spur verlief darin innerhalb von 10 Sek.

Der Schaum hatte eine Viskosität von 15 000 Centipoise.

## Beispiel 6

In einer Rührschüssel, entsprechend Beispiel 4, wurden folgende Rohstoffe zu einer homogenen Maische verrührt:

650 g 33%ige Magnesiumchloridlösung
600 g gebrannter Magnesit
155 g Kaolin
0,5 g Methyl-Hydroxyäthyl-Zellulose
0,5 g Manganchlorid
100 g Wasser

In dieser Maische wurden 40 g gebündelte und gehackte Glasfaser ("chopped strands") mit einer Lange von 6 mm dispergiert, wobei sich die Glasfaserbündel in Einzelfaser auffaserten.

Es wurde mit einer Lösung von 20 g 33%iger Wasserstoffperoxidlösung und 20 g Wasser verschäumt.

Der entstandene Schaum war nur durch Verstreichen in eine Form einzubringen. Der Schaum hatte innerhalb von 12 Stunden zu einem porösen Festkörper abgebunden, der folgende Eigenschaften aufwies:

Dichte 0,55 g/cm$^3$; Biegezugfestigkeit 30 kg/cm$^2$ und
Druckfestigkeit 43 kg/cm$^3$.

## Beispiel 7

In einer Rührschüssel, entsprechend Beispiel 4, wurden folgende Rohstoffe zu einer homogenen Maische verrührt:

650 g 33%ige Magnesiumchloridlösung
600 g gebrannter Magnesit
155 g gemahlener Kaolin
0,5 g Methyl-Hydroxyäthyl-Zellulose
0,25 g Manganchlorid
0,1 g Teramethylammonium-Perfuoroktansulfonat
100 g Wasser

Die homogene Maische wurde durch Einrühren von 20 g 35%igem Wasserstoffperoxid, verdünnt mit 20 g Wasser, verschäumt. Innerhalb von 10 Minuten nach Zugabe des Wasserstoffperoxides entstand eine schaumige dickflüssige Masse, die sich auch unter intensivem Rütteln nicht aus der Rührschüssel ausgießen ließ. Die Masse wurde in eine Form eingestrichen. Nach der Lagerung, bei der die Gewichtsveränderung unter einem Wert von 1 Gew.-% blieb, hatte der poröse Festkörper folgende Eigenschaften:

Raumgewicht 0,5 g/cm$^3$
Biegezugfestigkeit 15 kp/cm$^2$ nach 8 Tagen
Druckfestigkeit 45 kp/cm$^2$ nach 8 Tagen

## Beispiel 8

In einer Rührschüssel, entsprechend Beispiel 4, wurden folgende Rohstoffe zu einer homogenen Maische verrührt:

650 g 33%ige Magnesiumchloridlösung
600 g gebrannter Magnesit
70 g Bindekontaktton

0,5 g Methyl-Hydroxyäthyl-Zellulose
0,25 g Manganchlorid
1 g Natrium-Alkylsulfonat
100 g Wasser

Diese Maische wurde mit einer Mischung von 20 g 35%igem Wasserstoffperoxid und 20 g Wasser verschäumt.

Die verschäumte Masse war dickflüssig, so daß sie nur unter sehr starkem Rütteln aus der Rührschüssel ausgegossen werden konnte. Eine in der verschäumten Masse mit dem stumpfen Ende eines Bleistiftes gezogene Spur blieb mit scharfen Konturen stehen, ohne zu verlaufen. Die Maische hatte eine Viskosität von 3700 Centipoise, während der daraus hergestellte Schaum 15 000 Centipoise aufweist.

Die Masse erstarrte zu einem porösen Festkörper mit einem Raumgewicht von 0,4 g/cm$^3$ und einer Druckfestigkeit von 33 kp/cm$^2$. Der Bindekontaktton war ein fetter, eisenarmer Ton der üblicherweise als Hilfsmittel zur Herstellung von Emailschlicker verwendet wird.

Beispiel 9

In einer Rührschüssel wurde eine Rohstoffmischung der folgenden Zusammensetzung hergestellt:

650 g 33%ige Magnesiumchloridlösung
600 g gebrannter Magnesit
150 g weißer Bindeton
0,25 g Manganchlorid
0,5 g Zelluloseäther
1,0 g Natrium-Alkylsulfonat
100 g Wasser

Diese Mischung wirde mit 20 g 35%igem Wasserstoffperoxid und 20 g Wasser verschäumt.

Die verschäumte Masse war so zähflüssig, daß sie auch unter starkem Rütteln nicht vergossen werden konnte, Sie wurde in eine vorbereitete Form eingestrichen und erstarrte zu einem porösen Festkörper mit einem Raumgewicht von 0,5 g/cm$^3$.

Die Rohstoffmischung hatte, sowohl ohne als auch nach dem Zusatz des Zelluloseäthers, eine Viskosität von 1100 Centipoise. Nach dem Erreichen des Endvolumens, d.h. also nach etwa 5 Minuten, hatte die verschäumte Masse eine Viskosität von 5000 Centipoise.

Der wieße Bindeton war ein handelsübliches Produkt, das üblicherweise für die Herstellung von Emailschlicker verwendet wird. Es handelt sich dabei um einen mittelfetten kaolinitischen Ton.

Beispiel 10

In einer Rührschüssel nach Beispiel 4 wurde eine Rohstoffmischung der folgenden Zusammensetzung zu einer homogenen Maische verrührt:

650 g 33%ige Magnesiumchloridlösung
600 g gebrannter Magnesit
150 g Kaolin
0,25 g Manganchlorid
0,5 g organisches Verdickungsmittel
100 g Wasser

Das organische Verdickungsmittel wurde vor der Zugabe in einem Teil des Wassers zu einer 1%igen Lösung aufgelöst. Es wurden folgende organische Verdickungsmittel verwendet:

Carboximethylcellulose
Methylcellulose
Methyl-Hydroxyäthyl-Zellulose
Methyl-Hydroxyäthyl-Zellulose
Gelatine
Perlleim
Natrium-Caseinat

Die homogenen Maischen wurden nach der Zugabe des organischen Verdickungsmittels mit einem Gemisch aus 20 g 35%igem Wasserstoffperoxid und 20 g Wasser verschäumt.

Alle mit den obengenannten organischen Verdickungsmitteln versetzten Schäume waren zähflüssig, strukturviskose und ließen sich nicht frei vergießen, wohl aber mit einer Kelle verstreichen.

Im Gegensatz dazu waren verschäumte Maischen die unter Zusatz von Polyvinylalkohol, Stärke, Dextrin, Alginsäure, Traganth, Gummiarabikum oder Natrium-Wasserglas hergestellt waren, frei

fließend und konnten aus de Rührschüssel ausgegossen werden. Sie flossen auch ohne Schwierigkeit aus einem Spalt von 1 mm Breite aus.

Beispiel 11

Es wurde eine homogene Maische aus den folgenden Rohstoffen hergestellt:

650 g 33%ige Magnesiumchloridlösung
600 g gebrannter Magnesit
100 g gemahlener Kaolin
0,5 g Zelluloseäther
0,25 g Manganchlorid
0,5 g Natrium-Alkylsulfonat
130 g Wasser

Diese wurde durch Einrühren einer Mischung aus 12 g 35%igem Wasserstoffperoxid und 20 g Wasser verschäumt. Es entstand eine steife poröse Masse, in der eine mit dem stumpfen Ende eines Bleistiftes gezogene Spur stehen blieb. In diese schaumige Masse wurde gekörntes poröses Polystyrol von etwa 3 mm Korngröße eingerührt. Es gelang ohne Schwierigkeiten 50 g Polystyrolkugeln einzurühren, ohne daß sich die Schaumstruktur der zähflüssigen Masse änderte. Nach dem Abbinden entstand daraus ein Festkörper mit einem Raumgewicht von 0,4 $g/cm^3$. Ohne den Zusatz der Polystyrolkugeln wäre ein Raumgewicht von 0,7 $g/cm^3$ zu erwarten gewesen. Der poröse Feststoff eignete sich sehr gut als Verkleidungsmasse zur Schalldämpfung.

Beispiel 12

Es wurde die gleiche verschäumte Masse wie in Beispiel 11 hergestellt. Nach dem Verschäumen wurden in diese Masse 500 g Blähglaskugeln, mit einem mittleren Durchmesser von 10 mm, eingerührt. Hierzu war es notwendig, den Korbrührer durch einen einfachen einarmigen Rührer zu ersetzen, da die sehr sperrigen Blähglaskugeln sonst den Rüher blockierten. Das entstandene Gemische hatte nach dem Abbinden ein Raumgewicht von 0,66 $g/cm^3$. Die Blähglaskugeln hatten ein Schüttgewicht von 350 g/l.

Beispiel 13

Es wurde eine homogene Maische aus den folgenden Rohstoffen hergestellt:

650 g 33%ige Magnesiumchloridlösung
600 g gebrannter Magnesit
50 g gemahlener Kaolin
0,5 g Zelluloseäther
0,25 g Manganchlorid
0,5 g Natrium-Alkylsulfonat
30 g gemahlene Kurzglasfaser
100 g Wasser

In diese Maische wurden außerdem 150 g eines feinkörnigen Eisen-III-oxides eingerührt, das durch Glühen von technischem Eisen-II-Sulfat entstanden war.

Diese Masse wurde mittels eines Gemisches aus 30 g Wasserstoffperoxid (35%ig) und 30 g Wasser verschäumt. Es entstand eine verschäumte Masse, die so steif war, daß sie mittels einer kelle in würfelförmige Stücke aufgeschnitten werden konnte. Diese Masse ließ sich ohne Zerstörung der Schaumstruktur in Formen einstreichen. Nach dem Abbinden hatte sie ein Raumgewicht von 0,33 $g/cm^3$, bei einer Druckfestigkeit von 10 $kp/cm^2$.

Beispiel 14

Es wurde eine homogene Maische aus den folgenden Rohstoffen hergestellt:

650 g 33%ige Magnesiumchloridlösung
600 g gebrannter Magnesit
100 g gemahlener Kaolin
0,5 g Zelluloseäther
0,25 g Manganchlorid
0,5 g Natriumalkylsulfonat
30 g gemahlene Kurzglasfaser
100 g Wasser

Diese Maische wurde durch Einrühren von 10 g 35 %igem Wasserstoffperoxid und 10 g Wasser verschäumt. Die verschäumge Masse war trotz des relativ geringen Anteiles an Porenvolumen nicht frei

fließend und konnte auf eine befeuchtete Ziegelwand in einer Schichtstärke von mindestens 10 mm an der senkrechten Fläche aufgestrichen werden. Nach dem Abbinden hatte die Masse ein Raumgewicht von 0,74 g/cm³.

Beispiel 15

Es wurde eine homogene Maische aus den folgenden Rohstoffen hergestellt:

650 g 33%ige Magnesiumchloridlösung
600 g gebrannter Magnesit
155 g gemahlener Kaolin
0,5 g Methyl-Hydroxyäthyl-Zellulose
0,25 g Manganchlorid
1 g Natrium-Alkylsulfonat
120 g Wasser

In diese Maische wurden 20 g einer kristallinen Additionsverbindung aus Wasserstoffperoxid und Harnstoff, entsprechend der Formel $(NH_2)_2CO{\cdot}H_2O_2$, eingerührt. Die Sauerstoffentwicklung setzte ohne Verzögerung ein. Die verschäumte Masse war identisch mit einer solchen, die unter dem Zusatz der äquivalenten Menge an 35%igem wäßrigem Wasserstoffperoxid hergestellt worden war. Sie erstarrte zu einem porösen festen Körper, dessen Porengröße unter 1 mm lag.

**Patentansprüche**

1. Mittels Wasserstoffperoxid und gegebenenfalls Katalysatoren verschäumbare Magnesiazementmischungen, enthaltend
   a) Zelluloseäther und/oder wasserlösliche Eiweißprodukte und
   b) Kaoline und/oder Tone.

2. Magnesiazementmischungen gemäß Anspruch 1, die mittels Wasserstoffperoxid und gegebenenfalls Katalysatoren verschäumbar sind, enthaltend:

   12,5 bis 16 Gew.-% Magnesiumchlorid,
   35 bis 45 Gew.-% gebranntem Magnesit,
   35 bis 40 Gew.-% Wasser,
   0 bis 0,1 Gew.-% Netzmittel,
   3 bis 25 Gew.-% Tone und/oder Kaolin,
   0,005 bis 0,15 Gew.-% Zelluloseäther und/oder wasserlösliche Eiweißprodukte und
   gegebenenfalls Zuschlagstoffe.

3. Verfarhen zur Herstellung poröser Formkörper auf Basis Magnesiazement, dadurch gekennzeichnet, daß Magnesiumchlorid, gebrannter Magnesit, Wasser und gegebenenfalls Netzmittel und Zuschlagstoffe zusammen mit
   a) Zelluloseäthern und/oder wasserlöslichen Eiweißprodukten und
   b) Kaolinen und/oder Tonen

   homogen vermischt werden, und dieses Gemisch durch Einrühren von 0,1 bis 1 Gew.-% Wasserstoffperoxid und gegebenenfalls Katalysatoren verschäumt wird.

4. Verfahren zur Herstellung poröser Formkörper auf Basis Magnesiazement nach Anspruch 3, dadurch gekennzeichnet, daß durch Vermischen von

   12,5 bis 16 Gew.-% Magnesiumchlorid,
   35 bis 45 Gew.-% gebranntem Magnesit,
   35 bis 40 Gew.-% Wasser,
   0 bis 0,1 Gew.-% Netzmittel,
   3 bis 25 Gew.-% Tone und/oder Kaolin,
   0,005 bis 0,15 Gew.-% Zelluloseether und/oder wasserlöslichen Eiweißprodukten und
   gegebenenfalls Zuschlagstoffen.

   ein homogenes Gemisch zubereitet und dieses Gemisch durch Einrühren von 0,1 bis 1 Gew.-% Wasserstoffperoxid und gegebenenfalls Katalysatoren verschäumt wird.

5. Verwendung von Magnesiazementmischungen gemäß einem der Ansprüche 1 und 2 zur Ausfüllung und/oder Verschließung von Hohlräumen.

6. Verwendung von Magnesiazementmischungen gemäß einem der Ansprüche 1 und 2 für Brandschutztüren.

**Revendications**

1. Mélanges de ciments de magnésie gonflables à l'aide de peroxyde d'hydrogène et, le cas échéant, de catalyseurs contenant:

a) des éthers cellulosiques et/ou des produits protéiques hydrosulubles; et

b) des kaolins et/ou des argiles.

2. Mélanges de ciments de magnésie selon la revendication 1, gonflables à l'aide de peroxyde d'hydrogène et, le cas échéant, de catalyseurs contenant:

— 12,5 à 16% en poids de chlorure de magnésium;
— 35 à 45% en poids de magnésite calcinée;
— 35 à 40% en poids d'eau;
— 0 à 0,1% en poids d'agent mouillant;
— 3 à 25% en poids d'argiles et/ou de kaolin;
— 0,005 à 0,15% en poids d'éthers cellulosiques et/ou produits protéiques hydrosolubles, et, le cas échéant, des matières de charge.

3. Procédé de préparation de corps moulés poreux à base de ciment de magnésie, caractérisé en ce que l'on forme un mélange homogène de chlorure de magnésium, de magnésite calcinée, d'eau et, le cas échéant, d'agents mouillants et de matières de charge avec:

a) des éthers cellulosiques et/ou des produits protéiques hydrosolubles; et

b) des kaolins et/ou des argiles,

et on fait gonfler ce mélange par introduction sous agitation de 0,1 à 1% en poids de peroxyde d'hydrogène et, le cas échéant, de catalyseurs.

4. Procédé de préparation de corps moulés poreux à base de ciment de magnésie selon la revendication 3, caractérisé en ce que l'on prépare un mélange homogène à partir de:

— 12,5 à 16% en poids de chlorure de magnésium;
— 35 à 45% en poids de magnésite calcinée;
— 35 à 40% en poids d'eau;
— 0 à 0,1% en poids d'agent mouillant;
— 3 à 25% en poids d'argiles et/ou de kaolin;
— 0,005 à 0,15% en poids d'éthers cellulosiques et/ou produits protéiques hydrosolubles, et, le cas échéant, des matières de charge,

et on fait gonfler ce mélange par introduction sous agitation de 0,1 à 1% en poids de peroxyde d'hydrogène et, le cas échéant, de catalyseurs.

5. Utilisation de mélanges de ciments de magnésie selon l'une des revendications 1 et 2 pour le remplissage et/ou l'obturation d'espaces creux.

6. Utilisation de mélanges de ciments de magnésie selon l'une des revendications 1 et 2 pour des portes de protection contre l'incendie.

7. Utilisation de mélanges de ciments de magnésie selon l'une des revendications 1 et 2 pour des éléments de construction isolant de la chaleur.

8. Utilisation de mélanges de ciments de magnésie selon l'une des revendications 1 et 2 pour des murs de protection contre l'incendie dans des puits de câbles.

**Claims**

1. Magnesia cement mixtures which are able to be foamed using hydrogen peroxide and, optionally, catalysts, containing

a) cellulose ethers and/or water-soluble albuminous products and

b) kaolins and/or clays.

2. Magnesia cement mixtures according to claim 1, which are able to be foamed using hydrogen peroxide and, optionally, catalysts, containing:

12.5 to 16% by weight of magnesium chloride,
35 to 45% by weight of calcined magnesite,
35 to 40% by weight of water,
0 to 0.1 % by weight of wetting agents,
3 to 25% by weight of clays and/or kaolin,
0.005 to 0.15% by weight of cellulose ether and/or water-soluble albuiminous products and, optionally, additives.

3. Process for the preparation of porous moulded elements based on magnesia cement, characterised in that magnesium chloride, calcined magnesite, water and, optionally, wetting agents and additives are homogeneously mixed with

a) cellulose ethers and/or water-soluble albuminous products and

b) kaolins and/or clays,

and this mixture is foamed by stirring in 0.1 to 1% by weight of hydrogen peroxide and, optionally, catalysts.

4. Process for the preparation of porous moulded elements based on magnesia cement according to claim 3, characterised in that a homogeneous mixture is prepared by mixing

12.5 to 16% by weight of magnesium chloride,
35 to 45% by weight of calcined magnesite,
35 to 40% by weight of water,
0 to 0.1 % by weight of wetting agents,
3 to 25% by weight of clays and/or kaolin,
0.005 to 0.15% by weight of cellulose ether and/or water-soluble albuminous products and, optionally, additives,

and this mixture is foamed by stirring in 0.1 to 1% by weight of hydrogen peroxide and, optionally, catalysts.

5. Use of magnesia cement mixtures according to one of claims 1 and 2 for filling and/or sealing cavities.

6. Use of magnesia cement mixtures according to one of claims 1 and 2 for fire-protecting doors.

7. Use of magnesia cement mixtures according to one of claims 1 and 2 for heat-insulating building units.

8. Use of magnesia cement mixtures according to one of claims 1 and 2 for fire-protecting walls in cable chutes.